Europäisches Patentamt

(19) European Patent Office

Office européen des brevets

(11) Publication number: **0 056 822**
**B1**

(12) **EUROPEAN PATENT SPECIFICATION**

(45) Date of publication of patent specification: **23.04.86**

(51) Int. Cl.⁴: **G 02 C 5/04**

(21) Application number: **81900263.5**

(22) Date of filing: **14.01.81**

(86) International application number:
**PCT/JP81/00009**

(87) International publication number:
**WO 82/00530 18.02.82 Gazette 82/06**

(54) **COLLAPSIBLE GLASSES FRAME.**

(30) Priority: **01.08.80 JP 109910/80 U**

(43) Date of publication of application:
**04.08.82 Bulletin 82/31**

(45) Publication of the grant of the patent:
**23.04.86 Bulletin 86/17**

(84) Designated Contracting States:
**AT CH DE FR GB LI SE**

(56) References cited:
**DE-A- 470 102**
**GB-A- 25 442**
**GB-A- 480 479**
**JP-A-48 017 728**
**JP-U-47 021 644**
**JP-Y-38 018 556**
**US-A-2 047 646**
**US-A-2 856 813**

(73) Proprietor: **KANDA OPTICAL CO., LTD.**
**19-1 Shinpoincho Tennoji-ku**
**Osaka-shi Osaka (JP)**

(72) Inventor: **KANDA, Kouji**
**262, Shinnpoincho Tennoji-ku**
**Osaka-shi Osaka 543 (JP)**

(74) Representative: **Patentanwälte TER MEER -**
**MÜLLER - STEINMEISTER**
**Artur-Ladebeck-Strasse 51**
**D-4800 Bielefeld 1 (DE)**

Courier Press, Leamington Spa, England.

## Description

The present invention relates to collapsible spectacles comprising two lens frames provided with temples and connected together by a bridge extending from the upper side of one lens frame and being slidably engaged with an upper side of the other lens frame to render said two lens frames movable toward or away from each other.

Spectacles of this kind are known from the DE—A—470 102. According to this reference, the bridge portion connecting the lens frames of spectacles consists of two separate members slidably connected with each other for lengthening or shortening the bridge portion for adapting thereof to the width of the user's face. A spring biased locking pin provided on one of the members enters into one of a plurality of locking bores of the other member for locking the bridge members in a selected position. For adjusting the width of the spectacles, the user has to remove the locking pin from the related locking bore, to shift the bridge members and to replace the locking pin afterwards. In case the locking pin is not matched with the position of the locking bore, the bridge members are slightly shifted again until the locking pin enters into a locking bore.

From the GB—A—480 479, a pivotal connection between the side arms and the lens frame is known which allows on the one hand to fold down or open the side arms of the spectacle frame by pivoting about a vertical axis, and to place, on the other hand, the lens frame vertically in front of the eyes or to raise the lens frame horizontally above the latter in case the lenses are not needed by the user.

It is an object of the present invention to provide spectacles which are collapsible to a shape convenient to carry about.

The spectacles according to the present invention are characterized in that a respective holder is provided on each of said lens frames and that said bridge has a stop means at at least one end thereof and is fitted in said holders so as to be slidably movable in at least one of the holders to permit said lens frames both to be moved toward each other to a near position for folding and storage and also to be moved away to a distant position as defined by said stop means for pupil-to-pupil distance of the wearer, said stop means further preventing said bridge from slipping off said holders, and that each of said temples comprises an auxiliary temple segment having a length approximately equal to the vertical width of said lens frames, the auxiliary temple segment being rotable in a plane perpendicular to the plane of said lens frames, a temple main body hinged to the end of said auxiliary temple segment being rotable in a plane perpendicular to the plane of rotation of said auxiliary temple segment and biasing means provided on said hinged portion between said auxiliary temple segment and said lens frames to bias said auxiliary temple segment toward an unfolding direction.

In the following, embodiments of the invention are described in connection with the drawings.

Figure 1 is a perspective view showing spectacles according to the invention;

Figure 2 is a front view showing the same in a folded state;

Figure 3 is a perspective view showing a bridge;

Figure 4 is an exploded view showing the hinge portion of a temple;

Figure 5 is a sectional view of the spectacles as placed in a case;

Figure 6 is a perspective view of another embodiment in which the bridge is in a different position; and

Figure 7 is a perspective view showing other embodiments of the bridge and holding means.

Spectacles comprise a pair of lens frames 1, 2 connected together by a bridge 8 which is characteristic of the present invention. Temples 4, 4 are foldably attached to support members 12 projecting from the outer ends of upper sides 11 of the lens frames 1, 2.

The temple 4 comprises an auxiliary segment 5 having a length corresponding to the vertical width of the lens frames 1, 2 and a temple main body 41 having an ear engaging portion 42. As seen in Fig. 4, bearing lugs 13, 13 on the inner side of the support member 12 are fitted in between attaching lugs 51, 51 on the base end of the auxiliary temple segment 5, and the segment is pivoted to the member 12 by a pin 14, whereby the segment is made foldable in a plane perpendicular to the lens frames 1, 2.

The pin 14 carries a torsion spring 15 which biases the auxiliary temple segment 5 toward its unfolded position.

The temple main body 41 is hinged to the free end of the auxiliary temple segment 5 so as to be foldable in a plane perpendicular to the plane of turn of the segment 5.

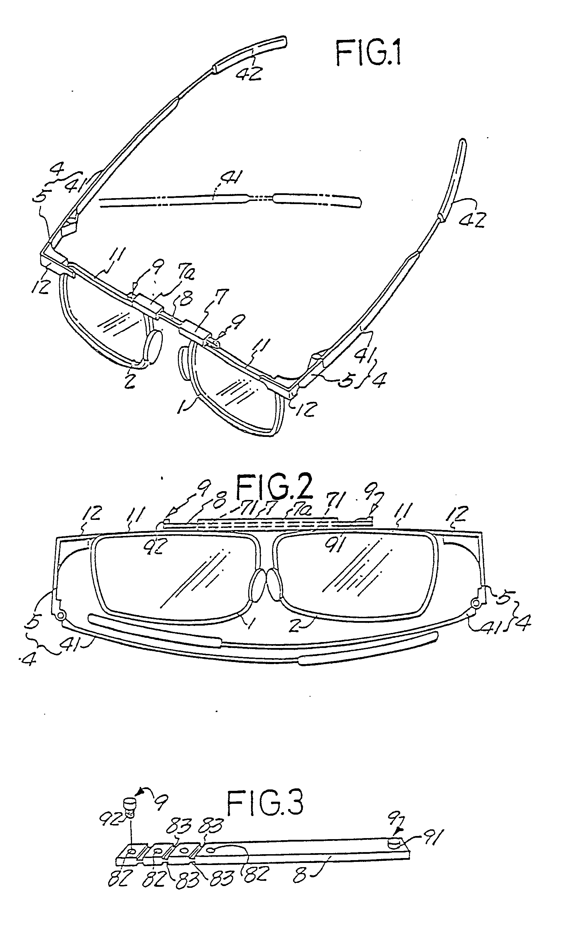

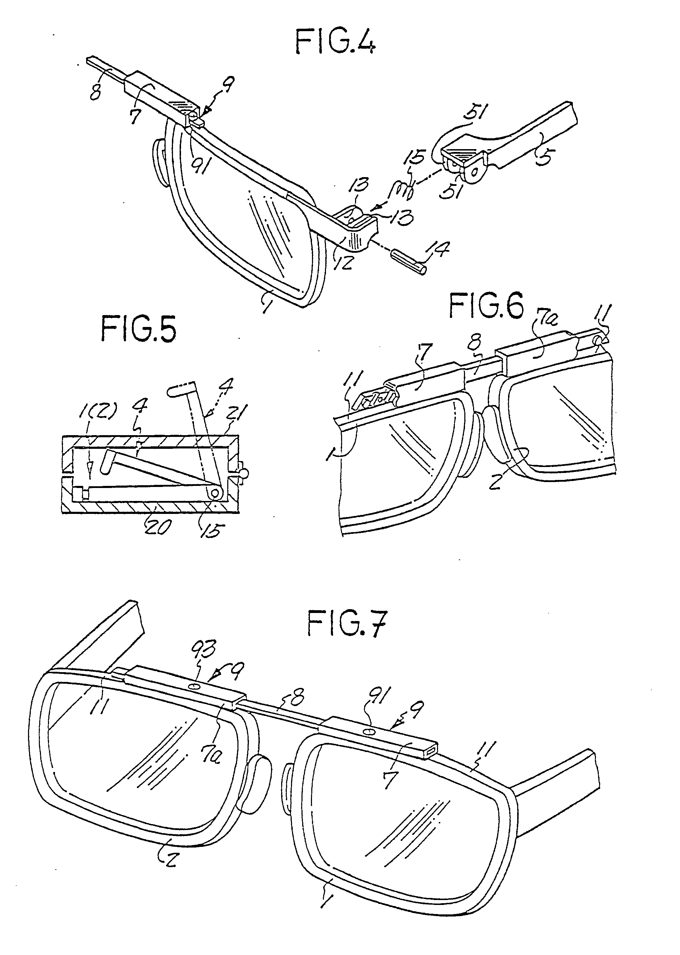

Accordingly the temples 4 are foldable without lapping over the lens frames 1, 2 to collapse the spectacles to a flat shape as seen in Fig. 2.

The upper sides 11, 11 of the lens frames 1, 2 are provided with holders 7, 7a in alignment with each other and each having a guide channel 71. The bridge 8 slidably extends through the guide channels 71.

The bridge 8 is in the form of a metal strip and is disposed with its planar surface in parallel to the upper sides 11, 11 of the lens frames. Alternatively, the planar surface is perpendicular to the upper side 11 of the lens frame as seen in Fig. 6.

As shown in Fig. 3, the bridge 8 has a fixing screw 91 screwed in one end and a plurality of screw holes 82 formed in the other end and aligned at spacing of about 3 mm. Cutout grooves 83, 83 are formed in the opposite sides of the bridge between the screw holes 82, 82. When the lens frames are adjusted to the pupil-to-pupil distance, an excess length of the bridge 8 is snapped off at a grooved portion.

An adjusting screw 92 is screwed in a screw hole 82 at the proper position in accordance with the distance between the pupils. The end screws 91, 92 serve as holding means 9 for preventing the bridge 8 from slipping off, i.e. for determining the maximum effective length of the bridge 8.

When the distance between the lens frames 1, 2 does not correspond to the pupil-to-pupil distance of a wearer to whom the spectacles are to be matched, the adjusting screw 92 is removed, and the bridge 8 is moved toward or away from the holder 7 to optimally adjust the distance between the lens frames 1, 2. The adjusting screw 92 is then screwed in the corresponding hole 82 at the outer end of the holder 7. The excessive portion of the bridge 8 is broken off.

When the lens frames 1, 2 so arranged are moved away from each other on the bridge 8 until the end screws 91, 92, namely the holding means 9, 9, strike the outer ends of the holders 7, 7a, the distance between the lens frames 1, 2 always corresponds to the pupil-to-pupil distance. The spectacles then will not fatigue the eyes.

When the spectacles are collapsed to the smallest size along the bridge 8 and placed into a case 20, and the lid 21 is closed as shown in Fig. 5, the lens frames 1, 2 and the temples 4 are all arranged in the same plane as indicated in broken lines. Thus the spectacles are foldable to a flat shape and convenient to carry.

Further when the lid 21 is opened, the torsion springs 15 act to raise the temples 4, 4 to an intersecting position. The spectacles are therefore convenient to take out.

If the planar surface of the bridge 8, as seen in Fig. 1, is in parallel to the upper sides 11, 11 of the lens frames, the bridge 8 involves reduced sliding resistance and is smoothly slidable through the holders 7, 7a when the spectacles are collapsed or stretched along the bridge 8.

Further as shown in Fig. 7, the base end of the bridge 8 may be fitted in one of the holders and secured thereto with the screw 91 or by spot welding, adhesive or the like, and the forward end of the bridge slidably fitted in the other holder 7a. After the distance between the lens frames 1, 2 has been adjusted optimally, the forward end can be fixed to the holder 7a with a clamp bolt 93.

The spectacles of this invention are useful as those in which the center-to-center distance between the lenses is easily adjustable to the pupil-to-pupil distance.

## Claims

1. Collapsible spectacles comprising two lens frames (1, 2) provided with temples (4) and connected together by a bridge (8) extending from the upper side (11) of one lens frame and being slidably engaged with an upper side (11) of the other lens frame (1) to render said two lens frames (1, 2) movable toward or away from each other, characterized in that a respective holder (7, 7a) is provided on each of said lens frames (1, 2) and that said bridge has a stop means (9) at at least one end thereof and is fitted in said holders (7, 7a) so as to be slidably movable in at least one of the holders to permit said lens frames (1, 2) both to be moved toward each other to a near position for folding and storage and also to be moved away to a distant position as defined by said stop means (9) for pupil-to-pupil distance of the wearer, said stop means (9) further preventing said bridge (8) from slipping off said holders (7, 7a), and that each of said temples (4) comprises an auxiliary temple segment (5) having a length approximately equal to the vertical width of said lens frames (1, 2), the auxiliary temple segment (5) being rotable in a plane perpendicular to the plane of said lens frames (1, 2), a temple main body (41) hinged to the end of said auxiliary temple segment (5) being rotable in a plane perpendicular to the plane of rotation of said auxiliary temple segment (5) and biasing means (15) provided on said hinged portion between said auxiliary temple segment (5) and said lens frames (1, 2) to bias said auxiliary temple segment (5) toward an unfolding direction.

2. Collapsible spectacles as defined in claim 1, characterized in that said holders (7, 7a) have a guide channel (71) therein and said stop means (9) of said bridge (8) comprises a screw (91, 92) projecting at that at least one end thereof, said screw (91, 92) preventing said bridge (8) from slipping off from said holders (7, 7a) and defining the distant position of said two lens frames (1, 2).

3. Collapsible spectacles as defined in claim 1 or 2, characterized in that said bridge (8) is in the form of a strip and is disposed with its planar surface approximately in parallel to the upper sides (11) of said lens frames.

4. Collapsible spectacles as defined in claim 1 or 2, characterized in that said bridge (8) is in the form of a strip and is disposed with its planar surface approximately perpendicular to said upper sides (11) of said lens frames (1, 2).

5. Collapsible spectacles as defined in claim 1, characterized in that said bridge (8) is formed with one of its ends in cutout grooves (83) which are spaced alternatively with screw holes (82), any portion which is excessive after setting the pupil-to-pupil distance of the wearer being removable at one of said grooves.

6. Collapsible spectacles as defined in one of claims 1 to 5, characterized in that said biasing means is a torsion spring (15).

## Patentansprüche

1. Zusammenklappbare Brille mit zwei mit Bügeln (4) versehenen Linsenfassungen (1, 2), die durch eine von der Oberseite (11) einer der Linsenfassungen ausgehende und verschiebbar mit einer Oberseite (11) der anderen Linsenfassung (1) in Eingriff stehende Brücke (8) derart miteinander verbunden sind, daß die beiden Linsenfassungen (1, 2) aufeinander zu und voneinander weg beweglich sind, dadurch gekennzeichnet, daß je ein Halter (7, 7a) an jeder der Linsenfassungen (1, 2) vorgesehen ist und daß die genannte Brücke wenigstens an einem Ende einen Anschlag (9) aufweist und derart in die genannten Halter (7, 7a) eingesetzt ist, daß sie gleitend in wenigstens einem der Halter beweglich ist und sowohl eine Bewegung der Linsenfassungen (1, 2) aufeinander zu in eine enge Stellung zum Zusammenklappen und zur Aufbewahrung als auch eine Bewegung voneinander weg in eine weite, durch den genannten Anschlag (9) definierte Stellung entsprechend dem Pupillenabstand des Benutzers gestatten, wobei der Anschlag (9) ferner ein Herausgleiten der Brücke (8) aus den Haltern (7, 7a) verhindert, und daß jeder der genannten Bügel (4) wenigstens einen Hilfs-Bügelabschnitt (5) aufweist, dessen Länge annähernd mit der senkrechten Weite der Linsenfassungen (1, 2) übereinstimmt und der in einer senkrecht zur Ebene der Linsenfassungen (1, 2) verlaufenden Ebene schwenkbar ist, und daß ein Hauptkörper (41) des Bügels scharnierförmig mit dem Ende des Hilfs-Bügelabschnitts (5) verbunden und in einer zu der Schwenkebene des Hilfs-Bügelabschnitts (5) senkrechten Ebene schwenkbar ist und daß an dem Gelenk zwischen dem Hilfs-Bügelabschnitt (5) und den Linsenfassungen (1, 2) eine Vorspanneinrichtung (15) zum Vorspannen des Hilfs-Bügelabschnitts (5) in Aufklapprichtung vorgesehen ist.

2. Zusammenklappbare Brille nach Anspruch 1, dadurch gekennzeichnet, daß die Halter (7, 7a) einen Führungskanal (71) aufweisen und daß der Anschlag (9) der Brücke (8) eine wenigstens an einem Ende der Brücke vorspringende Schraube (91, 92) umfaßt, die ein Herausgleiten der Brücke (8) aus den Haltern (7, 7a) verhindert und die weite Stellung der beiden Linsenfassungen (1, 2) definiert.

3. Zusammenklappbare Brille nach Anspruch 1 oder 2, dadurch gekennzeichnet, daß die Brücke (8) streifenförmig ausgebildet und mit ihren ebenen Oberflächen annähernd parallel zu den Oberseiten (11) der Linsenfassungen angeordnet ist.

4. Zusammenklappbare Brille nach Anspruch 1 oder 2, dadurch gekennzeichnet, daß die Brücke (8) streifenförmig ausgebildet und mit ihren ebenen Oberflächen annähernd senkrecht zu den Oberseiten (11) der Linsenfassungen (1, 2) angeordnet ist.

5. Zusammenklappbare Brille nach Anspruch 1, dadurch gekennzeichnet, daß die Brücke (8) an einem Ende mit eingeschnittenen Nuten (83) versehen ist, die abwechselnd mit Schraubenlöchern (82) in Abstand zueinander angeordnet sind, und daß ein ggf. nach dem Einstellen des Pupillenabstands des Benutzers überflüssig werdender Abschnitt an einer der Nuten entfernbar ist.

6. Zusammenklappbare Brille nach einem der Ansprüche 1 bis 5, dadurch gekennzeichnet, daß die Vorspanneinrichtung eine Torsionsfeder (15) ist.

**Revendications**

1. Lunettes repliables comprenant deux châsses (1, 2) de support de verres munies de parties temporales (4) de branches et reliées l'une à l'autre par un pontet (8) qui s'étend depuis le côté supérieur (11) d'une des châsses et qui est assemblé de façon coulissante avec un côté supérieur (11) de l'autre châsse (1) de manière à rendre ces deux châsses (1, 2) mobiles de façon éloignable ou rapprochable l'une par rapport à l'autre, caractérisées en ce qu'un support correspondant (7, 7a) est présent sur chacune des châsses (1, 2) et que le pontet comporte un moyen d'arrêt (9) à au moins une de ses extrémités et est engagé dans lesdits supports (7, 7a) de manière à pouvoir coulisser dans au moins un des supports afin que l'on puisse rapprocher l'une de l'autre les châsses (1, 2) jusqu'à une position voisine en vue de leur pliage et de leur rangement et aussi les éloigner l'une de l'autre jusqu'à une position distante définie par le moyen d'arrêt (9) pour l'écart pupillaire de l'utilisateur, le moyen d'arrêt (9) empêchant en outre le pontet (8) de s'échapper des supports (7, 7a), et en ce que chacune des parties temporales (4) comprend un segment auxiliaire (5) de partie temporale ayant une longueur à peu près égale à la largeur verticale des châsses (1, 2), le segment auxiliaire (5) de partie temporale pouvant tourner dans un plan perpendiculaire au plan des châsses (1, 2), un corps principal (41) de partie temporale articulé sur l'extrémité du segment auxiliaire (5) de partie temporale pouvant tourner dans un plan perpendiculaire au plan de rotation du segment auxiliaire (5) de partie temporale et un moyen de sollicitation (15) disposé sur la partie articulée entre le segment auxiliaire (5) de partie temporale et les châsses (1, 2) pour solliciter le segment auxiliaire (5) de partie temporale dans une direction de dépliage.

2. Lunettes repliables selon la revendication 1, caractérisées en ce que les supports (7, 7a) comportent un couloir de guidage (71) et le moyen d'arrêt (9) du pontet (8) comprend une vis (91, 92) faisant saillie à au moins une des extrémités de ce pontet, cette vis (91, 92) empêchant le pontet (8) de glisser hors des supports (7, 7a) et définissant la position distante des deux châsses (1, 2).

3. Lunettes repliables selon la revendication 1 ou 2, caractérisées en ce que le pontet (8) se présente sous la forme d'une bande et est disposé avec sa surface plane à peu près parallèle aux côtés supérieurs (11) desdites châsses.

4. Lunettes repliables selon la revendication 1 ou 2, caractérisées en ce que le pontet (8) se présente sous la forme d'une barrette et est disposé avec sa surface plane à peu près perpendiculaire aux côtés supérieurs (11) des châsses (1, 2).

5. Lunettes repliables selon la revendication 1, caractérisées en ce que le pontet (8) comporte à l'une de ses extrémités des rainures de sectionnement (83) qui alternent avec des trous (82) pour vis, toute partie en excédent après réglage sur l'écart pupillaire de l'utilisateur pouvant être éliminée à une desdites rainures.

6. Lunettes repliables selon l'une quelconque des revendications 1 à 5, caractérisées en ce que ledit moyen de sollicitation est un ressort de torsion (15).

0 056 822

FIG.1

FIG.2

FIG.3

1

0 056 822

FIG.4

FIG.5

FIG.6

FIG.7

2